# EUROPÄISCHE PATENTSCHRIFT

(11) **EP 0 636 808 B1**
(45) Veröffentlichungstag und Bekanntmachung des Hinweises auf die Patenterteilung: **15.01.1997**
(21) Anmeldenummer: 94104045.3
(22) Anmeldetag: 16.03.1994
(51) Int. Cl.: F16F 1/373, B60R 21/20

(54) **Halter zur schwingungsentkoppelten Befestigung von einem im wesentlichen plattenförmigen Maschinenelement**
Holder for a vibration decoupling fastening of a substantially disk-shaped machine element
Support à découplage des vibrations pour fixation d'un élément de machine substantiellement en forme de disque

(30) Priorität: 28.07.1993 DE 4325250
(43) Veröffentlichungstag der Anmeldung: 01.02.1995
(73) Patentinhaber: Firma Carl Freudenberg, D-69469 Weinheim (DE)
(72) Erfinder: Jäger, Kurt, D-69469 Weinheim (DE); Reinemuth, Otto, D-69469 Weinheim (DE)

(56) Entgegenhaltungen:
- EP-A- 0 542 213
- DE-A- 3 925 761
- GB-A- 1 123 818
- PATENT ABSTRACTS OF JAPAN vol. 12, no. 386 (M-754) 14. Oktober 1988 & JP-A-63 140 137 (BRIDGESTONE CORP) 11. Juni 1988

## Beschreibung

Die Erfindung betrifft einen Halter zur schwingungsentkoppelten Befestigung von einem im wesentlichen plattenförmigen Maschinenelement mit zumindest einer Ausnehmung, wobei der Halter eine hohlzylinderförmige Hülse aus einem zähharten Werkstoff umfaßt, die in radialer Richtung außenseitig von einem elastomeren Werkstoffkörper relativ unverdrehbar umschlossen ist, wobei der Werkstoffkörper eine die Hülse umschließende Ringnut aufweist, mit einer axialen Ausdehnung, die im wesentlichen der Dicke des Maschinenelements im Bereich der Ausnehmung entspricht und mit einem an die Form der Ausnehmung angepaßten Nutgrund, wobei der Nutgrund und die Begrenzung der Ausnehmung unter elastischer Vorspannung miteinander in Eingriff bringbar sind und wobei der Nutgrund zumindest drei gleichmäßig in Umfangsrichtung verteilte, sich radial in Richtung der Begrenzung der Ausnehmung erstreckende Erhebungen aufweist.

Ein solcher Halter ist aus der GB-A-1,123,818 bekannt. Der Halter gelangt zur Befestigung von Bauteilen zur Anwendung, die auf eingeleitete Stöße und/oder Vibrationen mit Fehlfunktionen reagieren. Der vorbekannte Halter ist beispielsweise zur Lagerung von Elektromotoren vorgesehen. Die Erhebungen weisen eine axiale Ausdehnung auf, die im wesentlichen der Dicke des abzustützenden Maschinenelements im Bereich der Ausnehmung entspricht und die gesamte axiale Breite der Ringnut überdeckt. Die Erhebungen bilden bei dem vorbekannten Halter den Nutgrund.

Durch eine derartige Ausgestaltung ist die Federkennung in radialer Richtung vergleichsweise hart, da der elastomere Werkstoff der Erhebungen an einem Ausweichen eingeschränkt wird.

Der Erfindung liegt die Aufgabe zugrunde, einen Halter der vorbekannten Art derart weiterzuentwickeln, daß eine sehr weiche Federkennung in radialer Richtung erzielbar ist und daß der Halter eine ausgezeichnete Schwingungsentkopplung des abgestützten Maschinenelements von seinem Träger ermöglicht.

Diese Aufgabe wird mit den Merkmalen von Anspruch 1 gelöst. Auf vorteilhafte Ausgestaltungen nehmen die Unteransprüche Bezug.

Zur Lösung der Aufgabe ist es vorgesehen, daß die radialen Erhebungen eine axial geringere Erstreckung aufweisen als es der Breite der Ringnut entspricht, so daß in der Ringnut beidseitig von den radialen Erhebungen ringförmige Freiräume entstehen, die radial außen durch die Begrenzung der Ausnehmung und radial innen durch den Nutgrund begrenzt sind und die über die in Umfangsrichtung zwischen den radialen Erhebungen gebildeten Zwischenräume miteinander axial verbunden sind. In Abhängigkeit von der Frequenz und der Schwingungsamplitude können die Gebrauchseigenschaften des Halters durch eine entsprechende Auswahl des elastomeren Werkstoffs und/oder die Größe der Vorspannungen in radialer und axialer Richtung auf das Maschinenelement eingestellt werden. Der axialen Vorspannung des Halters auf die Oberflächen des Maschinenelements kommt dabei besondere Bedeutung zu, da in diesem Bereich eine gute Relativbeweglichkeit zur Isolierung von in radialer Richtung eingeleiteten Schwingungen gewährleistet sein muß.

Der Nutgrund weist ebenso wie beim stand der Technik gemäß GB-A-1,123,818 zumindest drei gleichmäßig in Umfangsrichtung verteilte, sich radial in Richtung der Begrenzung der Ausnehmung erstreckende Erhebungen auf. Während der gesamten Gebrauchsdauer des Halters ist dadurch eine radiale Vorspannung der Buchse innerhalb der Ausnehmung des Maschinenelements sicher gewährleistet. Geringe Setzungserscheinungen während der Gebrauchsdauer haben dadurch keinen negativen Einfluß auf die Gebrauchseigenschaften des Halters. Außerdem kann durch eine derartige Ausgestaltung die Dämpfungscharakteristik des Halters bei in radialer Richtung eingeleiteten Schwingungen maßgeblich beeinflußt werden.

Die Erhebungen können beispielsweise sinusförmig und ineinander übergehend ausgebildet sein. Die Steifigkeit des Halters in radialer Richtung kann bei einer derartigen Ausgestaltung durch die Anzahl der Erhebungen in Umfangsrichtung und/oder die Erstreckung der Erhebungen in radialer Richtung beeinflußt werden.

Nach einer anderen Ausgestaltung können die Erhebungen durch acht in radialer Richtung angeordnete Nocken gebildet sein. Hierbei ist von Vorteil, daß durch die vergleichsweise große Anzahl der Nocken, die gleichmäßig in Umfangsrichtung verteilt sind, unabhängig von der Richtung der in radialer Richtung eingeleiteten Schwingungen eine gleichmäßig verteilte Federsteifigkeit bedingt ist. Die Federsteifigkeit wird im wesentlichen durch den elastomeren Werkstoff und den Querschnitt der Nocken bestimmt.

Gemäß einer weiteren Ausgestaltung kann der Werkstoffkörper herstellungsbedingt einstückig ausgebildet sein. Hierbei ist von Vorteil, daß zur Herstellung nur ein Werkzeug benötigt wird, in dem die Hülse vom elastomeren Werkstoff umspritzt wird. Ein nachträgliches bearbeiten des Halters ist dadurch entbehrlich. Im Anschluß an seine Herstellung liegt der erfindungsgemäße Halter als einbaufähiges Kompletteil vor und kann in die Ausnehmung eingeclipst werden.

Nach einer anderen Ausgestaltung kann der Werkstoffkörper dreiteilig ausgebildet sein, wobei die Ringnut von einer die Hülse umschließenden und den Nutgrund bildenden Buchse und zwei kreisringförmigen Scheiben begrenzt ist und wobei die Scheiben und die mit der Buchse verbundene Hülse zusammensteckbar ausgebildet sind. Hierbei ist von Vorteil, daß sich die Montage des Maschinenelements auf einem Träger durch eine derartige Ausgestaltung erheblich vereinfacht. Die Buchse und eine der Scheiben können als vormontierbare Einheit in einem ersten Montageschritt in der Ausnehmung des Maschinenelements festgelegt werden. Anschließend wird die zweite Scheibe auf den axial aus der Ausnehmung hervorstehenden Flansch der Hülse aufgeschoben. Das mit dem Halter vormontierte Maschinenelement wird anschließend auf einem Träger positioniert und beispielsweise mit diesem verschraubt. Die Hülse, die aus einem nichtkriechenden, bevorzugt metallischen Werkstoff bestehen kann, begrenzt die axiale Verpressung des Halters und des Maschinenelements, so daß eine gute Relativbeweglichkeit des Maschinenelements in radialer Richtung, bezogen auf die Hülse, gewährleistet ist

In Abhängigkeit von den Gegebenheiten des Anwendungsfalles können bei einer mehrteiligen Ausgestaltung die Buchse und die Scheiben durch Werkstoffe mit voneinander abweichenden Dämpfungseigenschaften gebildet sein. Die Gebrauchseigenschaften des Halters können dann beispielsweise nur durch eine Veränderung des Werkstoffs an die jeweiligen Gegebenheiten angepaßt werden, ohne daß es einer Änderung der geometrischen Abmessungen des Halters bedarf. An das jeweilige Schwingungsverhalten angepaßte Halter können dadurch in großen Stückzahlen wirtschaftlich günstig hergestellt werden.

Zur vollständigen Entkopplung von radial in den Halter eingeleiteten Schwingungen ist eine gute Relativbeweglichkeit des Maschinenelements in radialer Richtung, bezogen auf den Halter, erforderlich, so daß die Entkopplung radial eingeleiteter Schwingungen näherungsweise vollständig durch die radiale Nachgiebigkeit des elastomeren Werkstoffs der Buchse bewirkt wird. Um ein derartiges Betriebsverhalten zu begünstigen, kann der Werkstoffkörper zumindest auf den einander zugewandten axialen Begrenzungsflächen der Ringnut jeweils mit einer reibungsverringernden Oberflächenbeschichtung versehen sein, wobei die Oberflächenbeschichtung aus PTFE-Folie gebildet sein kann, die mit den Begrenzungsflächen adhäsiv verbunden ist. Eine Oberflächenbeschichtung aus PTFE bewirkt, unabhängig vom Werkstoff des Maschinenelements, ausgezeichnete Gebrauchseigenschaften des Halters bezüglich der Schwingungsentkopplung während einer langen Gebrauchsdauer. Außerdem ist die Handhabung einer derartigen Oberflächenbeschichtung im Vergleich zu einer flüssigen oder pastösen Oberflächenbeschichtung stark vereinfacht, da es einer Wartung des Halters während der gesamten Gebrauchsdauer und/oder einer Abdichtung nicht bedarf. Der Halter weist während der gesamten Gebrauchsdauer übereinstimmende Dämpfungseigenschaften auf.

In vielen Anwendungsfällen hat es sich als vorteilhaft bewährt, wenn der Werkstoffkörper eine Steifigkeit bei Belastungen axial in Richtung einer die Ringnut begrenzenden Seite aufweist, die 10 bis 80, bevorzugt 40- bis 60-mal größer ist als die Steifigkeit bei Belastungen radial auf die Buchse. Ein solcher Anwendungsfall liegt beispielsweise dann vor, wenn eine radiale Einleitung von Schwingungen in den Halter erfolgt und das Maschinenelement die Buchse durch sein Eigengewicht in gleicher Richtung belastet. Gelangt der erfindungsgemäße Halter beispielsweise zur Aufnahme eines Airbags im Lenkrad eines Kraftfahrzeugs zur Anwendung, sind oben beschriebene Randbedingungen gegeben. Schwingungen, die beispielsweise durch die Oberflächenbeschaffenheit der Fahrbahn angeregt und über die Räder und die Radaufhängung auf die Lenkung übertragen werden und/oder Unwuchten in zumindest einem der Räder und/oder Schwingungen, die durch die Verbrennungskraftmaschine angeregt werden, führen größtenteils zu radialen Schwingungen des Lenkrades. Um zu verhindern, daß diese Schwingungen die Auslöseelektronik des Airbags negativ beeinflussen, gelangen beispielsweise vier der erfindungsgemäßen Halter zur Anwendung. Die schwingungsentkoppelte Festlegung des als Pralltopf ausgebildeten und mit einem vergleichsweise hohen Eigengewicht versehenen Airbags hat weiterhin den Vorteil, daß Eigenschwingungen des Bauteils reduziert werden. Die weitgehend schwingungsfreie Befestigung des Airbags mittels der erfindungsgemäßen Halter am Lenkrad ist im Hinblick auf möglichst wenig Bewegung im Blickfeld des Fahrers von Vorteil, so daß dieser ohne Ablenkung dem Verkehrsgeschehen folgen kann.

Zwei Ausführungsbeispiele des erfindungsgemäßen Halters werden anhand der Zeichnungen weiter verdeutlicht.

Es zeigen:
Fig. 1 ein erstes Ausführungsbeispiel eines Halters als Gesamtteil, wobei der Werkstoffkörper einstückig ausgebildet ist,
Fig. 2 ein zweites Ausführungsbeispiel des erfindungsgemäßen Halters in einer Gesamtteilzeichnung, wobei der Werkstoffkörper mehrteilig ausgeführt ist,
Fig. 3 die Einheit, bestehend aus Buchse und Hülse als Einzelteil in längsgeschnittener Darstellung,
Fig. 4 die in Fig. 3 dargestellte Einheit in einer Ansicht,
und Fig. 5 eine der axialen Begrenzungen des Halters aus Fig. 2.

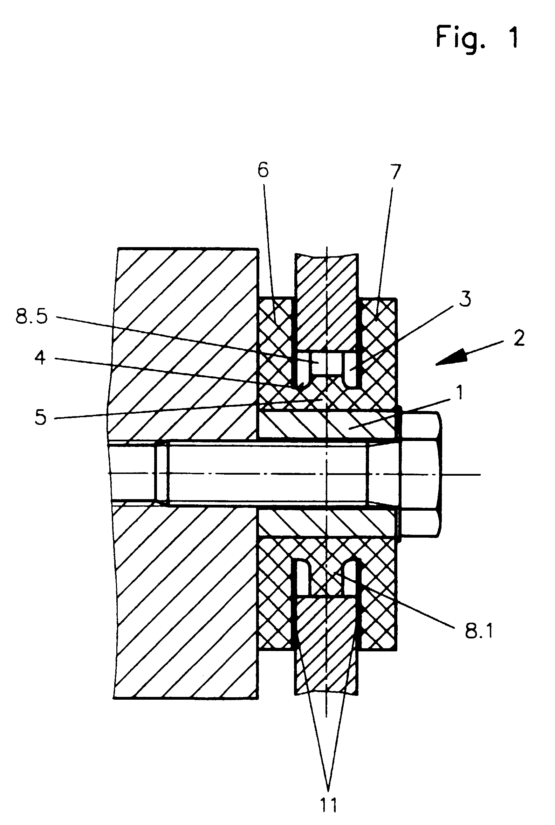

In Fig. 1 ist ein erstes Ausführungsbeispiel eines Halters gezeigt, der beispielsweise zur schwingungsentkoppelten Aufnahme eines Airbags am Lenkrad von Kraftfahrzeugen zur Anwendung gelangt. Der Halter umfaßt eine Hülse 1 aus einem metallischen Werkstoff, die zur Begrenzung des axialen Anpreßdrucks und zur sicheren Befestigung der Airbag-Halteplatte ausgebildet ist. Die Hülse ist in diesem Ausführungsbeispiel von einem elastomeren Werkstoffkörper 2 umschlossen, der einstückig ineinander übergehend ausgebildet ist. Der Werkstoffkörper ist mit einer Ringnut 3 versehen, deren axiale Ausdehnung im wesentlichen der Dicke der aufnehmenden Halteplatte entspricht. In diesem Ausführungsbeispiel ist die Ausnehmung der Halteplatte durch eine Bohrung gebildet, mit der die Erhebungen 8.1, 8.2 der Buchse 5 unter radialer Vorspannung in Eingriff sind. Die scheibenförmigen axialen Begrenzungen 6, 7 des Halters sind auf den einander zugewandten Innenseiten mit einer reibungsverringernden Oberflächenbeschichtung in Form einer PTFE-Folie 11 versehen. Die PTFE-Folie 11 bedingt eine gute Relativbeweglichkeit des in der Ringnut 3 aufgenommenen Maschinenteils in radialer Richtung. Dadurch wird eine ausgezeichnete Schwingungsentkopplung erreicht. Die Erhebungen 8.1, 8.2 ... sind in diesem Ausführungsbeispiel nockenförmig ausgebildet und gleichmäßig in Umfangsrichtung verteilt. Der Halter aus diesem Ausführungsbeispiel weist eine Steifigkeit in axialer Richtung auf, die 50-mal größer ist, als seine Steifigkeit in radialer Richtung.

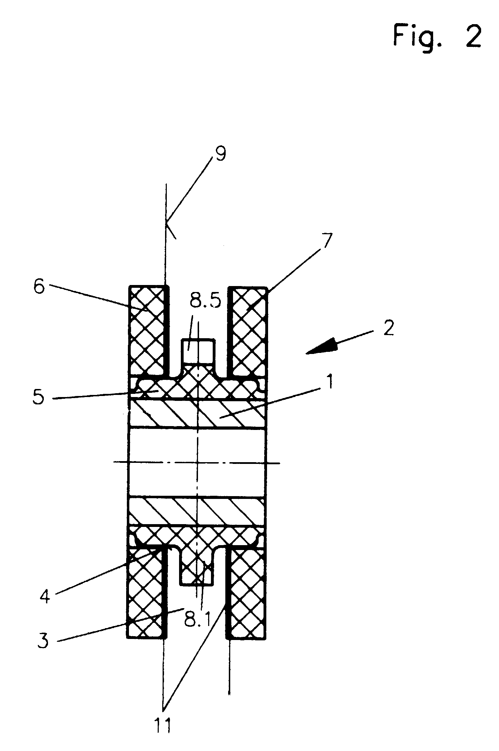

In Fig. 2 ist ein zweites Ausführungsbeispiel des erfindungsgemäßen Halters gezeigt, der abweichend von dem in Fig. 1 dargestellten Ausführungsbeispiel mehrteilig ausgebildet ist. Der Halter besteht aus einer Hülse 1 aus metallischem Werkstoff, die von der Buchse 5 des elastomeren Werkstoffkörpers 2 umfangsseitig umschlossen ist. Die Buchse 5 und die Hülse 1 sind miteinander vulkanisiert. Der Halter ist in axialer Richtung beiderseits durch jeweils eine Scheibe 6, 7 begrenzt, die identisch ausgebildet sind und auf einer ihrer Stirnseiten jeweils eine Folie 11 aus PTFE aufweisen. Der Vorteil der hier dargestellten Ausführung ist in einer vereinfachten Montage zu sehen. Die Hülse 1, die mit der Buchse 5 eine Einheit bildet, wird mit einer der Scheiben 6 vormontiert und in die Ausnehmung des Maschinenteils eingesetzt. Anschließend wird die zweite Scheibe 7 auf den in axialer Richtung die Ausnehmung überragenden Vorsprung gedrückt, so daß das schwingungsentkoppelte Maschinenelement an einer Trägerplatte montiert werden kann.

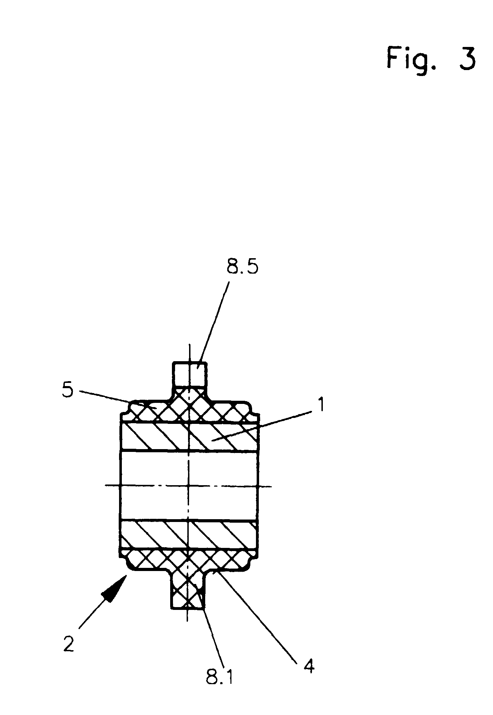

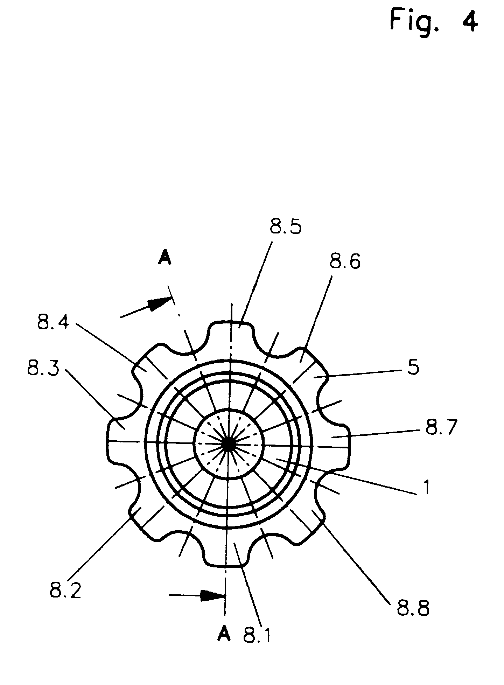

In Fig. 3 ist die aus der Hülse 1 und der Buchse 5 bestehende Einheit als Einzelteil entlang des Schnitts A-A aus Fig. 4 geschnitten dargestellt. Die Hülse 1 besteht aus einem metallischen Werkstoff und ist mit dem elastomeren Werkstoff der Buchse 5 adhäsiv verbunden.

In Fig. 4 ist die Einheit aus Fig. 3 in einer Seitenansicht dargestellt. Die Erhebungen 8.1 bis 8.8 sind nockenförmig ausgebildet und erstrecken sich in radialer Richtung.

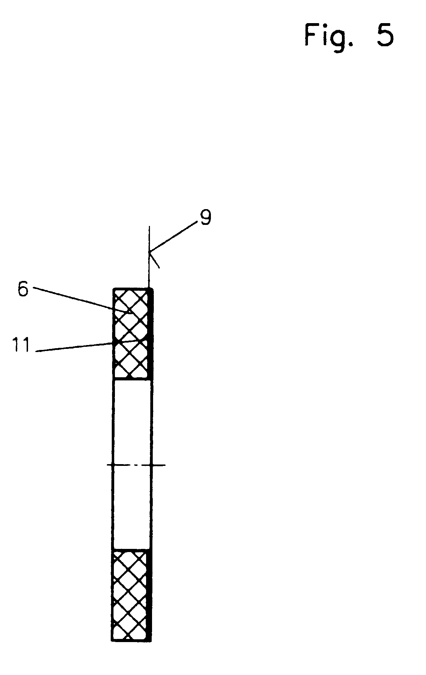

In Fig. 5 ist die Scheibe 6 aus Fig. 2 als Einzelteil gezeigt. Eine ihrer axialen Begrenzungsflächen 9 ist mit einer PTFE-Folie 11 beschichtet, um eine gute Schwingungsentkopplung des gelagerten Maschinenelements sicherzustellen. Die in Fig. 2 dargestellten Scheiben 6, 7 sind übereinstimmend ausgebildet, was in fertigungstechnischer Hinsicht und im Hinblick auf eine wirtschaftliche Herstellung des Halters von hervorzuhebender Bedeutung ist.

## Patentansprüche

1. Halter zur schwingungsentkoppelten Befestigung von einem im wesentlichen plattenförmigen Maschinenelement mit zumindest einer Ausnehmung, wobei der Halter eine hohlzylinderförmige Hülse (1) aus einem zähharten Werkstoff umfaßt, die in radialer Richtung außenseitig von einem elastomeren Werkstoffkörper (2) relativ unverdrehbar umschlossen ist, wobei der Werkstoffkörper (2) eine die Hülse (1) umschließende Ringnut (3) aufweist, mit einer axialen Ausdehnung, die im wesentlichen der Dicke des Maschinenelements im Bereich der Ausnehmung entspricht und mit einem an die Form der Ausnehmung angepaßten Nutgrund (4), wobei der Nutgrund (4) und die Begrenzung der Ausnehmung unter elastischer Vorspannung miteinander in Eingriff bringbar sind und wobei der Nutgrund (4) zumindest drei gleichmäßig in Umfangsrichtung verteilte, sich radial in Richtung der Begrenzung der Ausnehmung erstreckende Erhebungen (8.1, 8.2, 8.3,...) aufweist, dadurch gekennzeichnet, daß die radialen Erhebungen (8.1, 8.2, 8.3,...) eine axial geringere Erstreckung aufweisen als es der Breite der Ringnut (3) entspricht, so daß in der Ringnut (3) beidseitig von den radialen Erhebungen (8.1, 8.2, 8.3,...) ringförmige Freiräume entstehen, die radial außen durch die Begrenzung der Ausnehmung und radial innen durch den Nutgrund (4) begrenzt sind und die über die in Umfangsrichtung zwischen den radialen Erhebungen (8.1, 8.2, 8.3,...) gebildeten Zwischenräume miteinander axial verbunden sind.

2. Halter nach Anspruch 1, dadurch gekennzeichnet, daß die Erhebungen (8.1, 8.2, 8.3, ...) sinunsförmig und ineinander übergehend ausgebildet sind.

3. Halter nach Anspruch 1, dadurch gekennzeichnet, daß die Erhebungen (8.1, 8.2, 8.3, ...) durch acht in radialer Richtung angeordnete Nocken gebildet sind.

4. Halter nach einem der Ansprüche 1 bis 3, dadurch gekennzeichnet, daß der Werkstoffkörper (2) herstellungsbedingt einstückig ausgebildet ist.

5. Halter nach einem der Ansprüche 1 bis 3, dadurch gekennzeichnet, daß der Werkstoffkörper (2) dreiteilig ausgebildet ist, daß die Ringnut (3) von einer die Hülse (1) umschließenden und den Nutgrund (4) bildenden Buchse (5) und zwei kreisringförmigen Scheiben (6, 7) begrenzt ist und daß die Scheiben (6, 7) und die mit der Buchse (5) verbundene Hülse (1) zusammensteckbar ausgebildet sind.

6. Halter nach Anspruch 5, dadurch gekennzeichnet, daß die Buchse (5) und die Scheiben (6, 7) durch Werkstoffe mit voneinander abweichenden Dämpfungseigenschaften gebildet sind.

7. Halter nach einem der Ansprüche 1 bis 6, dadurch gekennzeichnet, daß der Werkstoffkörper (2) zumindest auf den einander zugewandten axialen Begrenzungsflächen (9, 10) der Ringnut (3) jeweils mit einer reibungsverringernden Oberflächenbeschichtung versehen ist.

8. Halter nach Anspruch 7, dadurch gekennzeichnet, daß die Oberflächenbeschichtung durch eine PTFE-Folie (11) gebildet ist und daß die Folie (11) und die Begrenzungsflächen (9, 10) adhäsiv verbunden sind.

9. Halter nach einem der Ansprüche 1 bis 8, dadurch gekennzeichnet, daß der Werkstoffkörper (2) eine Steifigkeit bei Belastungen axial in Richtung einer die Ringnut (3) begrenzenden Seiten aufweist, die 10 bis 80, bevorzugt 40- bis 60-mal größer ist als die Steifigkeit bei Belastungen radial auf die Buchse (5).

10. Halter nach Anspruch 9, gekennzeichnet durch die Verwendung zur Aufnahme eines Airbags im Lenkrad eines Kraftfahrzeugs.

## Claims

1. A holder for vibration decoupling fastening of a substantially disc-shaped machine element, having at least one recess, the holder comprising a hollow-cylindrical sleeve (1) which is made of a tough material and is surrounded in the radial direction on the outside by an elastomer material body (2) so as to be relatively non-rotable, the material body (2) having an annular groove (3) which surrounds the sleeve (1), having an axial extent which substantially corresponds to the thickness of the machine element in the region of the recess, and having a groove base (4) which is adapted to the shape of the recess, it being possible for the groove base (4) and the boundary of the recess to be brought into engagement with one another under elastic prestress, and the groove base (4) having at least three elevations (8.1, 8.2, 8.3;...) which are distributed evenly in the circumferential direction and extend radially in the direction of the boundary of the recess, characterized in that the radial elevations (8.1, 8.2, 8.3,...) have an axially shorter extent than corresponds to the width of the annular groove (3), such that annular cavities are produced in the annular groove (3) on both sides of the radial elevations (8.1, 8.2, 8.3,...), which cavities are bounded radially on the outside by the boundary of the recess and radially on the inside by the groove base (4), and which are connected to one another axially via the gaps formed in the circumferential direction between the radial elevations (8.1, 8.2, 8.3,...).

2. A holder according to claim 1, characterized in that the elevations (8.1, 8.2, 8.3,...) are designed to be sinusoidal and to merge into one another.

3. A holder according to claim 1, characterized in that the elevations (8.1, 8.2, 8.3,...) are formed by eight cams arranged in the radial direction.

4. A holder according to any one of claims 1 to 3, characterized in that, by virtue of the manufacture, the material body (2) is of integral design.

5. A holder according to any one of claims 1 to 3, characterized in that the material body (2) is of three-part design, in that the annular groove (3) is bounded by a bush (5) surrounding the sleeve (1) and forming the groove base (4) and by two circular annular discs (6, 7), and in that the discs (6, 7) and the sleeve (1) connected to the bush (5) are designed to be plugged together.

6. A holder according to claim 5, characterized in that the bush (5) and the discs (6, 7) are formed by materials having different damping properties.

7. A holder according to any one of claims 1 to 6, characterized in that the material body (2) is provided in each case with a friction-reducing surface coating at least on the mutually facing axial boundary surfaces (9, 10) of the annular groove (3).

8. A holder according to claim 7, characterized in that the surface coating is formed by a PTFE film (11), and in that the film (11) and the boundary surfaces (9, 10) are adhesively connected.

9. A holder according to any one of claim 1 to 8, characterized in that the material body (2) has a rigidity under loads acting axially in the direction of a side bounding the annular groove (3) which is 10 to 80, preferably 40 to 60, times greater than the rigidity under loads acting radially on the bush (5).

10. A holder according to claim 9, characterized by the use for receiving an airbag in the steering wheel of a motor vehicle.

## Revendications

1. Support à découplage des vibrations pour la fixation d'un élément de machine substantiellement en forme de disque avec au moins un creux, le support comprenant un fourreau (1) en forme de cylindre creux fabriqué dans une matière dure, qui est enveloppé extérieurement dans le sens radial, pratiquement sans torsion possible, par un corps de matière (2) en élastomère, le corps de matière (2) comportant une rainure annulaire (3) enveloppant le fourreau (1), avec une extension axiale correspondant substantiellement à l'épaisseur de l'élément de machine au niveau du creux et avec un fond de rainure (4) adapté à la forme du creux, le fond de rainure (4) et la délimitation du creux pouvant être mis en prise sous précontrainte élastique et le fond de rainure (4) comportant au moins trois élévations (8.1, 8.2, 8.3, ...) réparties uniformément dans le sens circonférentiel et étendues radialement dans le sens de la délimitation du creux, caractérisé en ce que les élévations radiales (8.1, 8.2, 8.3, ...) ont une extension axiale inférieure à la largeur de la rainure annulaire (3), de manière à faire apparaître dans la rainure annulaire (3), de part et d'autre des élévations radiales (8.1, 8.2, 8.3, ...), des espaces libres annulaires qui sont limités radialement à l'extérieur par la délimitation du creux et radialement à l'intérieur par le fond de rainure (4) et qui sont axialement reliés entre eux par l'intermédiaire des espaces libres formés entre les élévations radiales (8.1, 8.2, 8.3, ...) dans le sens circonférentiel.

2. Support selon la revendication 1, caractérisé en ce que les élévations (8.1, 8.2, 8.3, ...) sont sinusoïdales et sont formées de manière à se fondre l'une dans l'autre.

3. Support selon la revendication 1, caractérisé en ce que les élévations (8.1, 8.2, 8.3, ...) sont formées de huit saillies disposées dans le sens radial.

4. Support selon l'une quelconque des revendications 1 à 3, caractérisé en ce que le corps de matière (2) est réalisé, pour des raisons de fabrication, en une pièce.

5. Support selon l'une quelconque des revendications 1 à 3, caractérisé en ce que le corps de matière (2) est réalisé en trois pièces, en ce que la rainure annulaire (3) est limitée par une douille (5) enveloppant le fourreau (1) et formant le fond de rainure (4) et par deux disques (6, 7) en forme d'anneau de cercle et en ce que les disques (6, 7) et le fourreau (1) relié à la douille sont réalisés de manière emboîtable.

6. Support selon la revendication 5, caractérisé en ce que la douille (5) et les disques (6, 7) sont formés de matières ayant des propriétés d'amortissement différentes.

7. Support selon l'une quelconque des revendications 1 à 6, caractérisé en ce que le corps de matière (2) est muni au moins sur les surfaces de limitation (9, 10) axiales se faisant face de la rainure annulaire (3) d'un revêtement de surface diminuant la friction.

8. Support selon la revendication 7, caractérisé en ce que le revêtement de surface est formé par une feuille (11) en PTFE et en ce que la feuille (11) et les surfaces de limitation (9, 10) sont assemblées par collage.

9. Support selon l'une quelconque des revendications 1 à 8, caractérisé en ce que le corps de matière (2) présente une rigidité en cas de charges appliquées axialement dans le sens de l'un des côtés limitant la rainure annulaire (3), qui est de 10 à 80 fois, de préférence de 40 à 60 fois supérieure à la rigidité en cas de charges appliquées radialement sur la douille (5).

10. Support selon la revendication 9, caractérisé en ce qu'il est utilisé pour recevoir un airbag dans le volant d'un véhicule automobile.
